# EUROPEAN PATENT APPLICATION

(11) **EP 1 345 142 A2**
(43) Date of publication of application: **17.09.2003**
(21) Application number: 02023610.5
(22) Date of filing: 17.10.2002
(51) Int. Cl.: G06F 17/60

(54) **System for and method of optimizing mailing content with respect to postal fees**

(30) Priority: 04.03.2002 US 90292
(71) Applicant: Hewlett-Packard Company, A Delaware Corporation, Palo Alto, CA 94304 (US)
(72) Inventor: Rasmussen, Steve, Vancouver, Washington 98664-3750 (US); Davis, Susan M. F., Nampa, Idaho 83687 (US); Sesek, Robert, Meridian, Idaho 83642 (US); Mayes, Robert C., Boise, Idaho 83703 (US)
(74) Representative: Schoppe, Fritz, Dipl.-Ing.

(57) **Abstract**

The present invention is directed to a system (101) for optimizing package weight comprising a delivery fee table (103) correlating package weight to delivery cost and a processor (101) configured to calculate a first total weight of a package on the basis of individual components of the package (202). The processor is also configured to identify a target weight based on the first total weight and the delivery fee table, identify one or more weight changing alternatives (203) for at least one individual component of the package, and determine if the weight changing alternative should be implemented (207). The processor is also configured to determine a second total weight of the package.

## Description

### TECHNICAL FIELD

The present invention relates to software and hardware for computer systems and more specifically to software and hardware used to optimize the content of mailings based on incremental characteristics of postal and private shipping and/or delivery rates.

### BACKGROUND

Postal rates today are incremental in nature as are charges associated with many private delivery services. While the U.S. Postal Service has varying delivery options, each category is incremental in nature. For example, at the time of this writing, a first class stamp costs $0.34 for letters up to one ounce. Each additional ounce up to and including the thirteenth ounce is an additional $0.23. Typically six sheets of standard 8½ x 11 office paper weigh approximately one ounce. Similarly, the rates for U.S. Priority Mail also are incremental in nature and vary, for packages five pounds and less, by weight in one pound increments. For example, shipping a priority mail package which weighs less than one pound costs $3.50. Shipping a priority mail package which weighs less than two pounds costs $3.95. Similarly, a priority mail package weighing between two and three pounds costs $5.20, between three and four pounds costs$6.45, between four and five pounds costs$7.70. Charges for the U.S. Postal Service's Express Mail are also incremental in nature. For a package weighing less than or equal to eight ounces, the charge is$12.45. For an Express Mail package weighing greater than eight ounces but less two pounds the cost is $16.25. Similarly, Express Mail packages between two and three pounds cost $19.15, between three and four pounds cost $22.05, between four and five pounds costs $24.85. Fees for many private delivery services are also incremental in nature. Fees for overnight deliveries, two day deliveries and similar delivery methods are also incremental in nature.

Distributors of advertising material understand that the quality of the advertising material is associated, at least in the mind of the recipient, with the quality of the advertising itself. For example, smaller typeset is usually associated with information the sender would rather not disclose and may be required to be disclosed by law. Therefore a large amount of small typeset in advertising material may be associated with less desirable information. Alternatively, a heavier paper connotes a richness or firmness to the advertising media which may carryover to the advertised message. While a heavier weight paper may cost more if used as the advertising material, additional costs may also be associated with additional postage fees for processing, shipping and/or mailing of the heavier weight paper. The inclusion of additional materials, such as flyers, color brochures, pictures, and similar inserts may also be used to improve the quality and effectiveness of the advertising message.

Today advertisers generally configure their advertisements in a package and weigh the package to determine the associated delivery fees. Similarly, any item mailed or sent via private delivery service such as correspondence, bills, or other media is typically weighed to determine the required delivery fees.

### SUMMARY OF THE INVENTION

The present invention is directed to a system for optimizing package weight comprising a delivery fee table correlating package weight to delivery cost and a processor configured to calculate a first total weight of a package on the basis of individual components of the package. The processor is also configured to identify a target weight based on the first total weight and the delivery fee table, identify one or more weight changing alternatives for at least one individual component of the package, and determine if the weight changing alternative should be implemented. The processor is also configured to determine a second total weight of the package.

In an alternate embodiment, the present invention includes a method of optimizing package weight comprising: determining the individual weights of components of a parcel, combining the individual weights of the components to determine a total weight of the package and identifying possible modifications of the components and the corresponding resulting weights achievable from the possible modifications. The present invention also includes identifying one or more combinations of the possible modifications calculated to change the total weight to a new total weight having a specific relationship to a weight break point

### BRIEF DESCRIPTION OF THE DRAWINGS

FIGURE 1 shows one embodiment of the present invention;
FIGURE 2 shows a flow chart of the present invention of FIGURE 1; and
FIGURE 3 shows additional detail into the possible modification calculation of FIGURE 2.

### DETAILED DESCRIPTION

The process of packaging advertising material used today includes inserting the material in an envelope, weighing the envelope, and affixing the required postage. This process does not take advantage of the incremental nature of the delivery rates. A need exists for a systematic method of optimizing the information and the presentation of that information in view of the incremental nature of shipping and delivery rates of carriers such as the U.S. Postal Service. This optimization may be expressed as minimizing the cost per ounce of the material included in the mailing. For example, packages sent via the U.S. Postal Service weighing above one ounce but below two ounces each cost$0.57 (in the absence of bulk mailing rates) for delivery. A 1.1 ounce letter costs $0.52 per ounce (.57/1.1) while a 1.9 ounce letter costs$0.30 per ounce (.57/1.9). Similarly contents of mailings may be modified to reduce the overall weight of the mailing (or package) when such weight reduction results in the package weight be within a lower weight category resulting in a lower delivery cost.

The present invention includes a system for and a method of optimizing weight based delivery fees. This optimization may occur in several ways. First, the optimization may be performed to reduce the overall rate of the mailing in order to reduce the associated fees for mailing the information. Alternatively, if the weight of a specific mailing cannot be reduced down below the next weight breakpoint, the optimization may mean the inclusion of additional material or changing the format of the materials bearing the information currently contained in the mailing such as putting the information on a heavier weight media, using a larger font size, or increasing the size of the margins used in the printed information. This optimization is performed in light of the incremental nature of U.S. Postal and delivery service or private carrier delivery service weight breakpoints. The optimization is also based on the individual weights of the components of the parcel or other combination of materials to be sent to potential customers, current customers, or individuals on a mailing list. Once the individual weights of the components of a parcel have been determined, a total weight of the parcel is calculated and a comparison between the total weight and the incremental weight breakpoints is made. This comparison identifies where the total weight of the package falls with respect to the weight breakpoints. Next, possible modifications to the printed material included in the mailing are identified along with identification of the potential weight changes resulting from the possible modifications. These modifications for printed material may include a change of media size, a change of media weight, a change of margin size, a change of font size, a change in the amount of material included in the mailing, and/or any other change or combination of changes which affects the weight of the entire parcel. Once possible modifications of the components have been identified, combinations of these components are determined and potential new total weights can be calculated for the parcel.

Optimization of the cost to weight ratio also allows the addition of material once a threshold weight is exceeded. For instance, once the one ounce threshold is exceeded, additional material may be enclosed in the letter or package without increasing the associated postal rate as long as the total weight of the package does not exceed the next threshold weight (or two ounces in this example).

It is desirable in mail advertisements to include as much information about the product into the mailed package as possible. Quite often this increase in content reflects additional information of items being offered for sale. Alternatively, a heavier stock for the media may be used to make a better impression, or additional material such as photos, compact discs, sample cards, or products may be included without increasing postal rates. These additions are possible, without incurring additional delivery fees, due to or because of the incremental nature of postal rates.

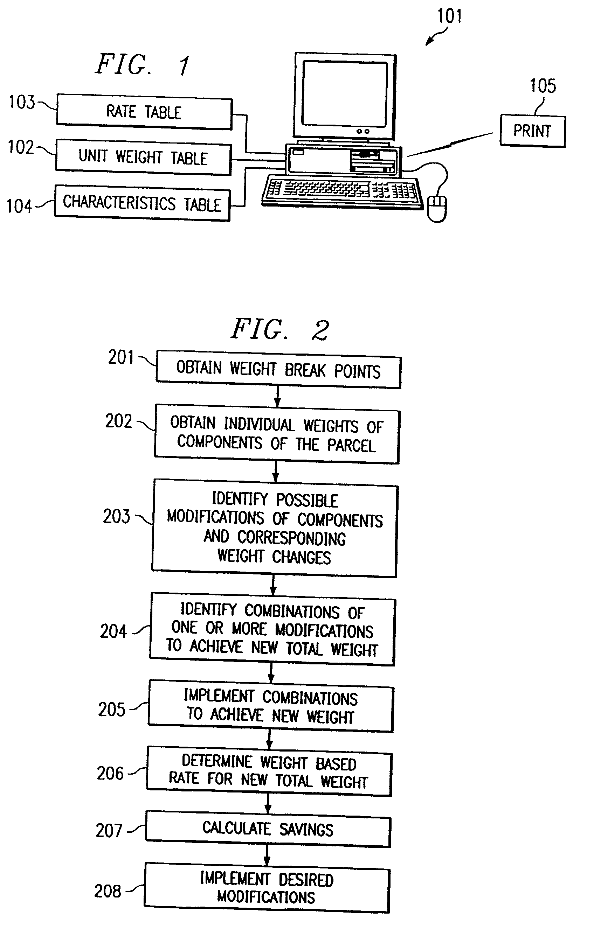

FIGURE 1 illustrates one embodiment of the present invention. In this embodiment, computer 101 includes a processor and software configured to optimize weight based delivery fees. In this embodiment, the user may use computer 101 to select the individual components of the parcel. Once these components have been selected, unit weight table 102 may be accessed to ascertain the weight of each of the components. Using the weights obtained from unit weight table 102 an expected total weight is calculated. Using the expected total weight calculated, rate table 103 is accessed to determine where the expected weight falls within the incremental nature of the delivery fees. A comparison is made between the expected total weight and the incremental weights included in unit weight table 102 to determine the difference between the expected total weight and the lower weight increment and to the next higher weight increment Computer 101 then calculates, using information contained in characteristics table 104, the possible weight change of the components intended to be included in the parcel through possible modifications such as a smaller font size, smaller margins, lighter weight media, or the possible deletion or addition of one or more inserts expected to be included in the parcel. Note that changes in font size or margins may affect the length of the materials possibly resulting in weight changes. These calculations are preferably performed prior to the printing of the individual components to be included in the parcel. Computer 101 then examines combinations of the weight reduction for the possible modification to the various components to determine if the total weight of the parcel can be reduced such that it would fall in the less expensive weight category.

Computer 101 is also configured to calculate the additional weight that may be added to the parcel without exceeding the current weight category the parcel falls within. Using information from characteristics table 104 computer 101 may determine that a larger font size, larger margins, additional inserts, or a different weight media may be used in printing the individual components of the parcel without increasing the overall weight of the parcel so much that the weight of the parcel falls in the next weight category. Once these calculations are performed by computer 101, a decision may be made as to which weight category the new total weight of the parcel will be and computer 101 implements the desired modifications to the components and sends these modified components to printer/print system 105 for printing. Computer 101 may further be configured to calculate the savings resulting from the modifications to the components to ensure that the new total weight of the parcel will be in a lower weight category.

One embodiment of the present invention for characteristic table 104 is as illustrated:

| Row | Margins | | | | Font | Paper Size | Resulting Pages |
|---|---|---|---|---|---|---|---|
| | Left | Right | Top | Bottom | | | |
| 1 | .25 | 25 | .25 | .25 | 12 | 8½ x 11 | 6 |
| 2 | 25 | 25 | .50 | .50 | 12 | 8½ x 11 | 7 |
| 3 | 25 | 25 | .25 | .25 | 10 | 8½ x 11 | 6 |
| 4 | 25 | 25 | .50 | .50 | 10 | 8½ x 11 | 6 |
| 5 | 25 | 25 | .25 | .25 | 8 | 8½ x 11 | 5 |
| 6 | 25 | 25 | .50 | .50 | 8 | 8½ x 11 | 6 |
| 7 | 25 | 25 | .25 | .25 | 12 | 8½ x 14 | 4 |
| 8 | 25 | 25 | .50 | .50 | 12 | 8½ x 14 | 5 |
| 9 | .25 | 25 | .25 | .25 | 10 | 8½ x 14 | 4 |
| 10 | 25 | 25 | .50 | .50 | 10 | 8½ x 14 | 4 |
| 11 | 25 | 25 | .25 | .25 | 8 | 8½ x 14 | 3 |
| 12 | 25 | 25 | .50 | .50 | 8 | 8½ x 14 | 4 |

Note that from the above table that if currently the margins were on 25 on the top, bottom, left and right, with a font size of 10 and 8½ x 11 paper (row 3 of the table), a single page and its weight of that page could be eliminated by using a font size of 8 (row 8). These changes could be made by the system or by presented to a user for selection of proposed modifications.

FIGURE 2 shows a flow chart of the present invention of FIGURE 1. In step 201 of FIGURE 2, weight breakpoints are obtained by computer 101 of FIGURE 1 from rate table 103 also of FIGURE 1. These rate tables were originally obtained from either the U.S. Postal Service or alternate delivery services which are being considered for shipment of the parcel. In step 202 of FIGURE 2, computer 101 obtains the individual weights of the components which are expected to be included in the parcel. These weights may be obtained from a table such as unit weight table 102 of FIGURE 1 or the actual weight of printed components. These individual weights may also be estimated, for example, based on the number of pages contained in the individual components expected to be included in the parcel. Using characteristics table 104 of FIGURE 1, step 203 identifies the possible modifications of components and the corresponding weight changes. For example, a document which is intended to be one of the components of the parcel currently includes a ten printed page document when printed with a font size of 12, one possible modification would be to change the font size to 10 and the document may then fit on nine printed pages. Additionally, computer 101 may be configured to determine the amount of material expected to be printed on the last page of the document. If this expected material consists of, for instance, two lines or less, margins may be changed for the entire document to eliminate the need for the last page.

The weight of the proposed media may also be considered in the possible modifications resulting in a weight change of the components of the parcel. Typically, six sheets of a standard weight 8½ x 11 inch paper can be included in a single ounce. Lighter weight media (or paper) may be used to reduce the weight of the parcel. If the parcel were expected to consist of seven sheets of standard weight paper, the parcel would be expected to exceed the one ounce increment and cost the sender of the parcel$0.57 cents per address the parcel is shipped to. By printing the parcel on lighter weight media (page), the entire parcel could weigh less than the one ounce increment and cost the shipper $0.34 to ship to each of the addressees. Note that the weight of the envelope, shipping material, staple, paper clip and any other items placed in the envelope would contribute to the total weight The presence or absence of these other items could also be included in the possible modifications to reduce the overall expense of shipping the parcel. For example, the inclusion of a paper clip may increase the weight associated with the parcel into the next level of incremental fees. Therefore, by eliminating the paper clip, the sender of the parcel can reduce the overall expense and save $0.23 per mailed piece. The calculations may also include the weight of the marking agent such as ink or toner. The sample characteristic table presented in Table 1 may be expanded to include the weight of the staples, binder clips, paper clips (both metal and plastic) or other enclosures in the parcel.

Returning to FIGURE 2, step 204 identifies the combination of one or more modifications and the resulting weight differential based on those possible modifications. This total weight differential is applied to the previous total weight to determine a possible new total weight In step 205, a determination is made as to whether the combination should be implemented to achieve a new total weight. This decision is typically based on whether the expected new total weight falls into the previous or lighter category of the shipping rates. In step 206, the weight based rate is determined from rate table 103 of FIGURE 1 and in step 207 a benefit is calculated This benefit is either the amount of money the shipper saved by modifying the weights of the individual components so that the overall weight of the parcel was within a lower weight bracket or may comprise of the ability to ship more material without a cost increase. In step 208, the chosen options are implemented.

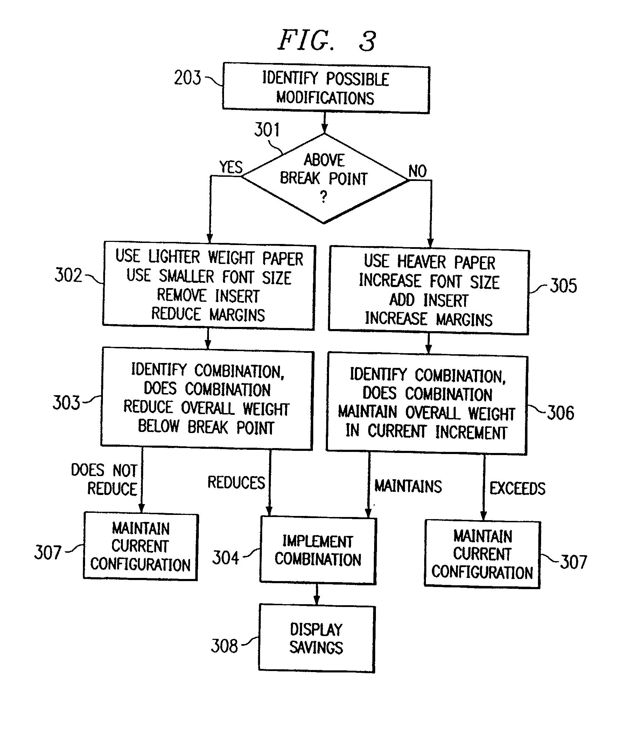

FIGURE 3 shows additional detail concerning one embodiment of the modification calculation of the present invention. As previously described in step 203 of FIGURE 2, possible modifications of components are analyzed to determine the overall weight differential possible from these modifications. In step 301 of FIGURE 3, a determination is made as to where the expected total weight of the parcel falls with respect to the rate tables. In step 301, the determination is made as to whether the expected total weight is above the breakpoint, or a weight limit, from the rate table. If the expected total weight is above a breakpoint, it may be possible to reduce the overall weight of the parcel allowing the new weight to fall within a less expensive weight category. In step 302, possible modifications are analyzed to determine the amount the weights of the individual components may be changed These possible modifications could include such changes as using lighter weight media, using a smaller font size, removing an insert, duplexing or reducing margins. These possible modifications are identified here only as examples. The present invention is not limited to these five possibilities. Note that other changes to the parcel may be made to reduce the overall weight of the parcel. For example, staples or paper clips may be removed, paper clips may be replace by staples, metal paper clips may be replaced by plastic paper clips, binder clips may be replaced by paper clips, binder clips may be replace by staples, glue binding or any other modifications made to the content of the parcel.

In step 303, the weight savings from the new individual components of step 302 are combined to determine the overall weight savings if all the modifications are implemented For example, the weight savings of each possible modification may be added to determine if the overall weight reduction would reduce the overall weight of the package to the next lower weight increment on the rate tables. If the overall combination does reduc e the overall weight into the next lower category, the weight based delivery fee may be optimized from a combination of the weight saving modifications. Once it has been determined that it is possible to reduce the overall weight, various combinations are analyzed to determine the number of combinations or choices possible to actually reduce the weight. Once these combinations are identified, step 304 implements these combinations. Alternatively, the possible weight reducing combinations may be presented to a user for selection of the combination to be implemented

Returning to step 301 if the determination is made that the expected total weight of the proposed parcel is not within range of a breakpoint, then a determination concerning how much additional weight may be added to the parcel while keeping below the current weight increment is made. For example, if the parcel is being sent via first class mail, the least expensive weight classification is one ounce. Therefore, a sender of a parcel does not benefit from reducing the weight of a 0.5 ounce parcel. In this case, rather than concentrating on reducing the weight, the sender of the parcel may consider how to increase the weight of the parcel without increasing the overall postal or shipping rates. If the weight of the parcel is 0.5 ounce the shipper can increase the weight up to an additional half an ounce and still maintain the overall weight of the parcel at or below the one ounce lowest weight rate. Alternatively, a user may decide that weight reduction calculations should only be performed if the total weight is within a given weight from a weight breakpoint For example, a user may decide to pursue weight reductions equal to or less than 0.5 ounces. Given this criteria, step 301 would only be answered "yes" if expected weight was within 0.5 ounces of a breakpoint. In step 305, the weight based delivery fees may be optimized by using several things including: a heavier media, increasing the font size which may result in additional pages, adding inserts, simplex printing or increasing the margins which could increase the number of pages in the parcel. In step 306, the combinations are identified which maintain the overall weight within the current rate increment. One method of implementing step 306 is to implement each of the possible modifications which result in individual parcel components increasing weight and determine if the subsequent total parcel weight is still below the maximum weight for that weight/rate category. If the combination identified results in a new total weight which is still within the current weight category, step 304 implements the identified combinations. Alternatively, proposed modifications may be presented to the user for selection of the possible modification to be implemented.

In both step 303 and step 306, combinations may be identified which do not optimize the weight based delivery fees. In step 303 these would be possible modifications identified but which, if implemented, would not reduce the overall weight of the parcel enough to bring the new total weight down into the next lower weight category. In this case, step 307 maintains the current configuration since changes have not optimized the weight based delivery fees. Similarly, in step 306, if the identified modifications increase the weight of the parcel so much that the next more expensive weight category rate is encountered, then the system would maintain the current configuration, step 307. The overall effect of FIGURE 3 is to implement the changes which will optimize the weight based delivery fees. The overall result of this flow is to have overall parcel weight at or slightly below the maximum weights of each of the incremental steps of the rate table. Note that these modifications may be made sequentially and that this process may be repeatedly performed to optimize the weight based delivery fee. In step 308 the savings are displayed.

Note that two iterations of FIGURE 3 may be encountered For example, if the weight of a parcel is within a given weight category, a first iteration may be performed to reduce the weight of the parcel. If the parcel weight cannot be beneficially reduced, a second iteration may be performed to determine if additional material may be included in the parcel without increasing shipping costs. When sequential calculations are performed, an exit strategy would preferably be included to ensure an answer was determined. One possible exit strategy is to limit the number of iterations through FIGURE 3 to two. Alternatively, iterations through steps 302 and 305 may be limited to one. Note that the present invention may be applied to any media contained in a parcel, including paper, brochures, flyers, products, product samples, credit cards, debit cards, phone cards, return envelopes, stickers, return addresses and to any type of distribution including advertising, billing, marketing, solicitation for business, etc. Additionally, the present invention also includes, in addition to weight considerations, rate changes based on package size, delivery areas, speed of delivery, destinations or other rates which are incremental in nature.

## Claims

1. A system for optimizing package weight comprising:
a delivery fee table 103 correlating package weight to delivery cost; and
a processor 101 configured to:
(i) calculate a first total weight of a package on the basis of individual components of said package 202;
(ii) identify a target weight based 205 on said first total weight and said delivery fee table;
(iii) identify one or more weight changing alternatives 203 for at least one individual component of said package;
(iv) determine using said target weight if said weight changing alternative should be implemented 207; and
(v) determine a second total weight of said package 207.

2. The system of claim 1 further configured to calculate a delivery fee 207 associated with said second total weight.

3. The system of claim 1 wherein said processor is further configured to: retrieve 202 individual component unit weights for each of said components.

4. The system of claim 1, wherein said processor is further configured to:
identify an attribute of at least one of said individual components 302, 305;
identify an alternative attribute of said one individual component 302, 305; and
calculate a individual new weight of said individual component 303, 306 with said alternative attribute.

5. The apparatus of claim 4, wherein said attributes comprise one or more of font type, font size, page margins, media weight, paper size, fastening method, addition and deletion of inserts 302, 305.

6. A method of optimizing package weight comprising:
determining 202 the individual weights of components of a parcel;
combining said individual weights of said components to determine a total weight of said package;
identifying possible modifications 203 of said components and corresponding resulting weights achievable from said possible modifications; and
identifying one or more combinations 204 of said possible modifications calculated to change said total weight to a new total weight having a specified relationship to a weight break point.

7. The method of claim 6 wherein said weight break-point is associated with respective delivery fees 103.

8. The method of claim 6, wherein said step of identifying possible modifications of said components further comprises the steps of:
identifying an attribute 302 of at least one of said components;
identifying an alternative attribute 302 of said one component; and
calculating a individual new weight 303 of said component with said alternative attribute.

9. Computer readable code stored on computer media for optimizing package weight comprising:
a first subprocess for determining the individual weights of components of a parcel 202;
a second subprocess for calculating a total weight from said individual weights of said components;
a third subprocess for identifying possible modifications of said components 203 and corresponding resulting weights achievable from said possible modifications; and
a fourth subprocess for identifying one or more combinations of said possible modifications 204 calculated to change said total weight to a new total weight having a specified relationship to a weight break-point.

10. The computer readable code stored on computer media of claim 9, wherein said second subprocess of identifying possible modifications of said components further includes:
identifying attribute of at least one of said components 302;
identifying an alternative attribute of said one component 302; and
calculating a individual new weight of said component with said alternative attribute 303.
